# EUROPÄISCHE PATENTSCHRIFT

(11) **EP 1 139 609 B1**
(45) Veröffentlichungstag und Bekanntmachung des Hinweises auf die Patenterteilung: **12.04.2006**
(21) Anmeldenummer: 00125391.3
(22) Anmeldetag: 04.12.2000
(51) Int. Cl.: G06F 12/06, H04L 12/40

(54) **Bussystem**
Bus system
Système de bus

(30) Priorität: 29.03.2000 DE 10015438
(43) Veröffentlichungstag der Anmeldung: 04.10.2001
(73) Patentinhaber: Valeo Schalter und Sensoren GmbH, 74321 Bietigheim-Bissingen (DE)
(72) Erfinder: Hoffsommer, Klaus, 74321 Bietigheim-Bissingen (DE)
(74) Vertreter: Dreiss, Fuhlendorf, Steimle & Becker

(56) Entgegenhaltungen:
- DE-A- 3 116 471
- DE-B- 2 555 806

## Beschreibung

Die Erfindung betrifft ein Bussystem mit mehreren Busteilnehmern, wobei jeder Busteilnehmer an wenigstens zwei Anschlussleitungen angeschlossen ist.

Die Erfindung betrifft ferner ein elektronisches Schaltungsteil zur Codierung eines ihm zugewiesenen Busteilnehmers eines Bussystems.

An einem Bussystem liegende Teilnehmer benötigen eine eindeutige Identifizierung um kommunizieren zu können.

Es sind verteilte Systeme bekannt, bei denen die Teilnehmer seither über getrennte Signalleitungen untereinander bzw. mit einem Master-Teilnehmer kommunizieren. dies ist z.B. bei Ultraschall-Parkhilfesystemen der Fall.

Aus dem Stand der Technik sind die folgenden Identifizierungen bekannt. Jeder Teilnehmer wird mit getrennten Signalleitungen angesprochen. Zum Beispiel bei einem Parkhilfesystem ein Steuergerät und 4 Sensoren, bzw. 2 mal 4 Sensoren. Bei einem anderen System wird die Kommunikation der Busteilnehmer über eine Erlaubnisleitung gesteuert (Enable oder Chip-Select). Außerdem sind spezielle Steckerpins bekannt, die der Codierung dienen. Die Teilnehmer können über diese Codierung ihre Identifikation selbst bestimmen. Außerdem sind an Steckerpins angeschlossene Widerstände oder sonstige el. Bauteile bekannt, die der Codierung dienen. Die Teilnehmer können über diese Codierung ihre Identifikation selbst bestimmen. Schließlich ist die Codierung der Teilnehmer selbst, durch Programmierung oder fortlaufende Seriennummer, bekannt.

Aus der DE 25 55 806 B1 ist eine Schaltungsanordnung zur Auswahl eines Bausteins aus einer Vielzahl von Bausteinen bekannt, bei der jeder Baustein mehrere Anschlussklemmen für den Zweck der Bausteinauswahl aufweist, von denen jeweils einem Paar eine Bitstelle einer Bausteinadresse zugeordnet ist.

Die DE 31 16 471 A1 hat eine adressierbare Einrichtung zum Gegenstand, bei der eigens hierfür vorgesehene Steckerpunkte mit einem Erdpotential bzw. hochohmig geschaltet werden, um eine Adresse zu codieren.

Der Erfindung liegt die Aufgabe zugrunde, ein Bussystem und ein elektronisches Schaltungsteil zur Codierung eines ihm zugewiesenen Busteilnehmers eines Bussystems bereitzustellen, bei dem die Codierung und/oder Identifizierung der einzelnen Busteilnehmer einfach und ohne materiellen Aufwand erfolgt.

Diese Aufgabe wird erfindungsgemäß mit einem Bussystem gelöst, das die Merkmale des Anspruchs 6 aufweist sowie mit einem elektronischen Schaltungsteil das die Merkmale des Anspruchs 1 aufweist. Erfindungsgemäße Weiterbildungen ergeben sich aus den Unteransprüchen.

Die Erfindung beschreibt die Identifizierung der Teilnehmer durch den Anschluss von versorgungs-, und Signalleitungen in unterschiedlichen Kombinationen. Der Teilnehmer erkennt dadurch über die Auswahl der Anschlusspins für die einzelnen Anschlussleitungen seinen Identifizierungscode selbst, der in der Anschlusskombination steckt.

Für diese Identifizierung sind weder zusätzliche Pins, oder externe Bauteile nötig, noch müssen die Teilnehmer selbst codiert werden.

Die Erfindung eignet sich besonders für Bussysteme mit wenigen Teilnehmern (z.B. Sensoren, Aktoren, Anzeigen, el. Bauteile, ICs). Möglich sind 2, 6, 24 codierte Teilnehmer bei 2, 3, 4 Anschlussleitungen.

Ein elektronischer Schaltungsteil im Busteilnehmer ermöglicht mehrere Anschlusskombinationen von Masse, Plus und Signal. Dieser Schaltungsteil führt diese Leitungen intern dem jeweiligen Zweck zu. Über die Anschlusskombination bestimmt der Busteilnehmer seine Identifizierung.

Die Erfindung wird an Hand des nachfolgenden Beispiels kurz erläutert. Es wird ein Bussystem zwischen einem Steuergerät (ECU und sechs Sensoren (Xa bis Xf) verwendet. Das Bussystem ist mit drei Anschlussleitungen ausgestattet, nämlich einer Versorgungsleitung P, einer Masseleitung G und einer Signalleitung S für die Kommunikation.

Jeder Sensor (X) besitzt drei Anschlusspins (1), (2), (3).

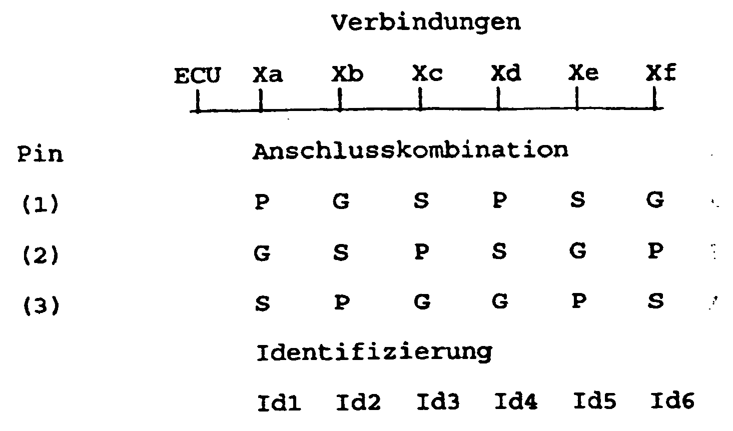

Die Sensoren sind identisch aufgebaut. Sie besitzen eine Zuordnungstabelle um aus der Anschlusskombination ihre Identifizierung zu wählen. Im Beispiel erkennt der Sensor Xa seinen Anschlusskombination "P an Pin 1, G an Pin 2, S an Pin 3" und ermittelt darüber seine Identifizierung als "Id1". Über diese Identifizierung kann das Steuergerät (ECU) den Sensor adressieren.

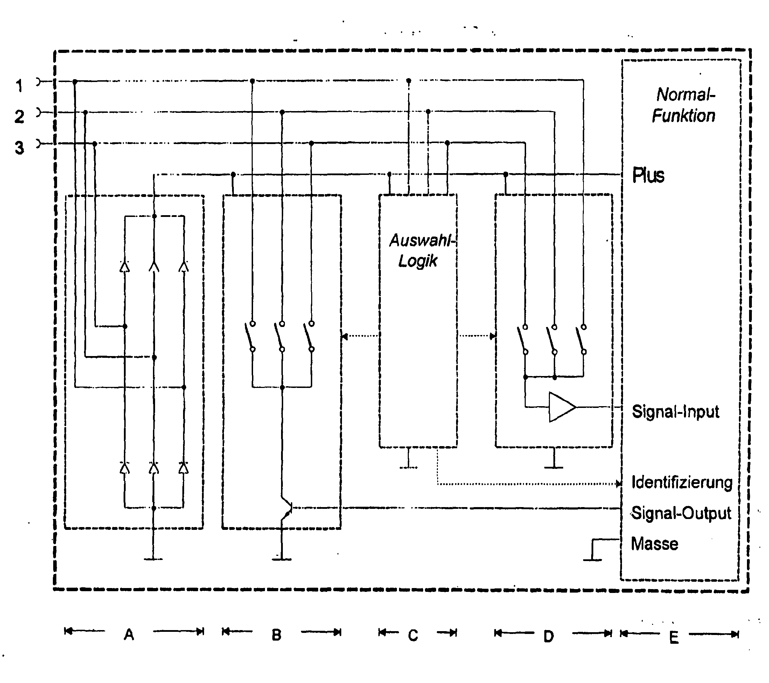

Das Schaltungsprinzip der Sensoren ist in der Zeichnung, die eine interne Beschaltung zeigt, dargestellt. Die einzelnen Schaltungsteile sind:
A) Auswahl von Plus und Masse für internen Verwendung (z.B. über Diodenarray);
B) Signalausgangstreiber mit Anschluss-Selektierung;
C) Auswahllogik zur Einstellung der Anschluss-Selektierung und zur Ermittlung der Identifizierung;
D) Anschluss-Selektierung mit Signaleingangsanpassung;
E) Normal-Funktionsteil mit eigentlicher Aufgabe.

Im Folgenden wird der Initialisierungsablauf kurz erläutert:

Nach dem Anschluss von P, G, S auf die Pins 1, 2, 3 werden alle Schaltungsteile über den Schaltungsteil "A" mit Plus und Masse versorgt. Der Teil "C" Auswahllogik ermittelt welche Anschlusskombination vorliegt. Plus P und Masse G. können einfach voneinander unterschieden werden. Die Signalleitung S wird dadurch erkannt, dass sie Signale übermittelt. Diese Signale können extern erzeugt werden (z.B. von der ECU) oder intern durch die Auswahllogik selbst, die in einer Initialisierungsphase die Reaktion auf ausgegebene Signale an den einzelnen Pins testet.

Ist die Anschlusskombination bestimmt, so stellt die Auswahllogik die Anschluss-Selektierung von Signaleingangs- und Signalausgangstreiber ein. Über die Zuordnungstabelle wird die Identifizierung bestimmt.

Anzumerken ist noch, dass durch die Leitungen P,G und S bis zu 6 Busteilnehmer identifiziert werden können. Die Kommunikation kann mit einem externen Steuergerät oder nur zwischen Busteilnehmern erfolgen (Master-Slave oder Multi-Master Prinzip). Über die Identifizierung kann statt oder zusätzlich zur Adressierung auch die Funktionalität des Busteilnehmers hinterlegt sein. (Beispiel: Idl veranlasst den Sensor zur Messung von rotem Licht, Id2 zur Messung von grünem Licht.)

In speziellen Systemen kann die Signalleitung und eine Versorgungsleitung zu einer Leitung zusammengefasst sein. In diesen Systemen ist eine Identifizierung von zwei Busteilnehmern möglich.

In speziellen Systemen kann eine Identifizierung nur über die beiden Versorgungsleitungen erfolgen. Eine Adressierung ist ohne Signalleitung natürlich nicht möglich, jedoch können dadurch zwei unterschiedliche Funktionalitäten angewählt werden.

In einem System mit zwei Busleitungen (S_a und S_b) können bis zu 24 Busteilnehmer identifiziert werden. S_a und S b müssen dabei voneinander unterscheidbare physikalische Busanbindungen sein (z.B. Ruhepegel s_a = High, Ruhepegel s_b = Low).

## Patentansprüche

1. Elektronisches Schaltungsteil (A, B, C, D) zur Codierung eines ihm zugewiesenen Busteilnehmers (Xa, Xb, Xc, Xd, Xe, Xf, E) eines Bussystems, **dadurch gekennzeichnet, dass** das Schaltungsteil (A, B, C, D) in unterschiedlichen Anschlusskombinationen mit wenigstens zwei als Versorgungsleitungen (P, G) und/oder Signalleitungen (S, S_a, S_b) ausgebildeten Anschlussleitungen (P, G, S, S_a, S_b) verbindbar ist und dass das Schaltungsteil (A, B, C, D) Millel enthält, um die jeweilige Anschlusskombination der angeschlossenen Anschlussleitungen (P, G, S, S_a, S_b) zu erkennen und den ihm zugewiesenen Busteilnehmer (Xa, Xb, Xc, Xd, Xe, Xf, E) abhängig von der erkannten Anschlusskombination zu codieren.

2. Elektronisches Schaltungsteil (A, B, C, D) nach Anspruch 1, **gekennzeichnet durch** eine Schaltung (A) zur Versorgung des Schaltungsteils (A, B, C, D) mit einer Versorgungsspannung (P, Plus) und mit Masse (G), wobei die Schaltung (A) vorzugsweise als Diodenarray ausgebildet ist.

3. Elektronisches Schaltungsteil (A, B, C, D) nach Anspruch 1 oder 2, **gekennzeichnet durch** eine Auswahllogik (C), zur Ermittlung der Anschlusskombination der an das elektronische Schaltungsteil (A, B, C, D) angeschlossenen Anschlussleitungen (P, G, S, S_a, S_b).

4. Elektronisches Schaltungsteil (A, B, C, D) nach einem der vorstehenden Ansprüche, **gekennzeichnet durch** einen Signalausgangstreiber (B) mit Anschluss-Selektierung, derart augestattet dass einen Signalausgang (Signal-Output) des Busteilnehmers (Xa, Xb, Xc, Xd, Xe, Xf. E) wahlweise mit einem von mehreren Anschlusspins (1, 2, 3) des Schaltungsteils (A, B, C, D) verbindet, wobei das Schaltungsteil (A, B, C, D) über die Anschlusspins (1, 2, 3) mit den Anschlussleitungen (P, G, S, S_a, S_b) verbindbar ist.

5. Elektronisches Schaltungsteil (A, B, C, D) nach einem der vorstehenden Ansprüche, **gekennzeichnet durch** einen Signaleingangstreiber (D) mit Anschluss-Selektierung, derart augestattet dass einen Signaleingang (Signal-Input) des Busteilnehmers (Xa, Xb, Xc, Xd, Xe, Xf, E) wahlweise mit einem von mehreren Anschlusspins (1, 2, 3) des Schaltungsteils (A, B, C, D) verbindet, wobei das Schaltungsteil (A, B, C, D) über die Anschlusspins (1, 2, 3) mit den Anschlussleitungen (P, G, S, S_a, S_b) verbindbar ist.

6. Bussystem mit mehreren Busteilnehmern (Xa, Xb, Xc, Xd, Xe, Xf, E), wobei jeder Busteilnehmer (Xa, Xb, Xc, Xd, Xe, Xf, E) an wenigstens zwei Anschlussleitungen (P, G) angeschlossen ist, und wobei jedem Busteilnehmer (Xa, Xb, Xc, Xd, Xe, Xf, E) ein elektronisches Schaltungsteil (A, B, C, D) zur Codierung des jeweiligen Busteilnehmers (Xa, Xb, Xc, Xd, Xe, Xf, E) zugewiesen ist, **dadurch gekennzeichnet, dass** das Schaltungsteil (A, B, C, D) in unterschiedlichen Anschlusskombinationen mit als Versorgungsleitungen (P, G) und/oder Signalleitungen (S) ausgebildeten Anschlussleitungen (P, G, S, S_a, S_b) verbindbar ist und dass das Schaltungsteil (A, B, C, D) Mittel enthält, um die jeweilige Anschlusskombination der angeschlossenen Anschlussleitungen (P, G, S, S_a, S_b) zu erkennen und den ihm zugewiesenen Busteilnehmer (Xa, Xb, Xc, Xd, Xe, Xf, E) abhängig von der erkannten Anschlusskombination zu codieren.

7. Bussystem nach Anspruch 6, **dadurch gekennzeichnet, dass** das Schaltungsteil (A, B, C, D) nach einem der Ansprüche 1 bis 5 ausgebildet ist.

8. Bussystem nach Anspruch 6 oder 7, **dadurch gekennzeichnet, dass** das Schaltungsteil (A, B, C, D) die Codierungen aller Anschlusskombinationen aufweist.

9. Bussystem nach einem der Ansprüche 6 bis 8, **dadurch gekennzeichnet, dass** die Busteilnehmer (Xa, Xb, Xc, Xd, Xe, Xf, E) gleich ausgebildet sind.

10. Bussystem nach einem der Ansprüche 6 bis 9, **dadurch gekennzeichnet, dass** die Anschlussleitungen (P, G) für Masse (G) und Spannungsversorgung (P) vorgesehen sind.

11. Bussystem nach einem der Ansprüche 6 bis 10, **dadurch gekennzeichnet, dass** eine Anschlussleitung für Masse (G) und eine Anschlussleitung als Signalleitung und für die Spannungsversorgung vorgesehen sind.

12. Bussystem nach einem der Ansprüche 6 bis 11, **dadurch gekennzeichnet, dass** drei Anschlussleitungen (P, G, S) für Masse (G), Spannungsversorgung (P) und Steuersignale (S) vorgesehen sind.

13. Bussystem nach einem der Ansprüche 6 bis 12, **dadurch gekennzeichnet, dass** vier Anschlussleitungen (P, G, S_a, S_b) für Masse (G), Spannungsversorgung (P), Steuersignale A (S_a) und Steuersignale B (S_b) vorgesehen sind.

14. Bussystem nach einem der Ansprüche 6 bis 13, **dadurch gekennzeichnet, dass** das Verhalten identischer Busteilnehmer (Xa, xb, Xc, Xd, Xe, Xf, E) durch die Anschlusskombination der Anschlussleitungen (P, G, S) bestimmt wird.

15. Bussystem nach einem der Ansprüche 6 bis 14, **dadurch gekennzeichnet, dass** das Schaltungsteil (A, B, C, D) die Potentiale der Anschlussleitungen (P, G, S, S_a, S_b) dem Busteilnehmer (Xa, Xb, Xc, Xd, Xe, Xf, E) zuführt.

16. Bussystem nach einem der vorhergehenden Ansprüche, **dadurch gekennzeichnet, dass** das Schaltungsteil (A, B, C, D) in den Busteilnehmer (Xa, Xb, Xc, Xd, Xe, Xf, E) integriert ist.

## Revendications

1. Partie de circuit électronique (A, B, C, D) pour le codage d'un abonné de bus (Xa, Xb, Xc, Xd, Xe, Xf, E), qui lui est attribué, d'un système de bus, **caractérisée en ce que** la partie de circuit (A, B, C, D) peut être reliée dans différentes combinaisons de raccordement à au moins deux lignes de raccordement (P, G, S, S_a, S_b) conçues comme lignes d'alimentation (P, G) et/ou lignes de signalisation (S, S_a, S_b), et **en ce que** la partie de circuit (A, B, C, D) contient des moyens pour reconnaître la combinaison de raccordement respective des lignes de raccordement (P, G, S, S_a, S_b) raccordées et coder l'abonné de bus (Xa, Xb, Xc, Xd, Xe, Xf, E) qui lui est attribué en fonction de la combinaison de raccordement reconnue.

2. Partie de circuit (A, B, C, D) électronique selon la revendication 1, **caractérisée par** un circuit (A) pour l'alimentation de la partie de circuit (A, B, C, D) avec une tension d'alimentation (P, Plus) et avec la masse (G), le circuit (A) étant conçu de préférence comme un agencement de diodes.

3. Partie de circuit (A, B, C, D) électronique selon la revendication 1 ou 2, **caractérisée par** une logique de sélection (C) pour la détermination de la combinaison de raccordement des lignes de raccordement (P, G, S, S_a, S_b) raccordées à la partie de circuit (A, B, C, D) électronique.

4. Partie de circuit (A, B, C, D) électronique selon l'une quelconque des revendications précédentes, **caractérisée par** un driver de sortie de signal (B) avec sélection de raccordement, conçue de telle sorte qu'elle relie une sortie de signal (Signal-Output) de l'abonné de bus (Xa, Xb, Xc, Xd, Xe, Xf, E) au choix à l'une des nombreuses broches de raccordement (1, 2, 3) de la partie de circuit (A, B, C, D), la partie de circuit (A, B, C, D) pouvant être reliée par les broches de raccordement (1, 2, 3) aux lignes de raccordement (P, G, S, S_a, S_b).

5. Partie de circuit électronique (A, B, C, D) selon l'une quelconque des revendications précédentes, **caractérisée par** un driver d'entrée de signal (D) avec sélection de raccordement, conçue de telle sorte qu'elle relie une entrée signal (Signal-Output) de l'abonné de bus (Xa, Xb, Xc, Xd, Xe, Xf, E) au choix à l'une des plusieurs broches de raccordement (1, 2, 3) de la partie de circuit (A, B, C, D), la partie de circuit (A, B, C, D) pouvant être reliée par les broches de raccordement (1, 2, 3) aux lignes de raccordement (P, G, S, S_a, S_b).

6. Système de bus comprenant plusieurs abonnés de bus (Xa, Xb, Xc, Xd, Xe, Xf, E), chaque abonné de bus (Xa, Xb, Xc, Xd, Xe, Xf, E) étant raccordé au moins à deux lignes de raccordement (P, G), et une partie de circuit (A, B, C, D) électronique étant attribuée à chaque abonné de bus (Xa, Xb, Xc, Xd, Xe, Xf, E) pour le codage de l'abonné de bus (Xa, Xb, Xc, Xd, Xe, Xf, E) concerné, **caractérisé en ce que** la partie de circuit (A, B, C, D) peut être reliée dans différentes combinaisons de raccordement à des lignes de raccordement (P, G, S, S_a, S_b) réalisées comme lignes d'alimentation (P, G) et/ou lignes de signalisation (S), et **en ce que** la partie de circuit (A, B, C, D) contient des moyens pour reconnaître la combinaison de raccordement respective des lignes de raccordement (P, G, S, S_a, S_b) raccordées, et coder l'abonné de bus (Xa, Xb, Xc, Xd, Xe, Xf, E) qui lui est attribué en fonction de la combinaison de raccordement reconnue.

7. Système de bus selon la revendication 6, **caractérisé en ce que** la partie de circuit (A, B, C, D) est réalisée selon l'une quelconque des revendications 1 à 5.

8. Système de bus selon la revendication 6 ou 7, **caractérisé en ce que** la partie de circuit (A, B, C, D) présente les codages de toutes les combinaisons de raccordement.

9. Système de bus selon l'une quelconque des revendications 6 à 8, **caractérisé en ce que** les abonnés de bus (Xa, Xb, Xc, Xd, Xe, Xf, E) sont réalisés de façon identique.

10. Système de bus selon l'une quelconque des revendications 6 à 9, **caractérisé en ce que** les lignes de raccordement (P, G) sont prévues pour la masse (G) et l'alimentation en tension (P).

11. Système de bus selon l'une quelconque des revendications 6 à 10, **caractérisé en ce qu'**une ligne de raccordement est prévue pour la masse (G) et une ligne de raccordement comme ligne de signalisation et pour l'alimentation en tension.

12. Système de bus selon l'une quelconque des revendications 6 à 11, **caractérisé en ce que** trois lignes de raccordement (P, G, S) sont prévues pour la masse (G), l'alimentation en tension (P) et des signaux de commande (S).

13. Système de bus selon l'une quelconque des revendications 6 à 12, **caractérisé en ce que** quatre lignes de raccordement (P, G, S_a, S_b) sont prévues pour la masse (G), l'alimentation en tension (P), les signaux de commande A (S_a) et les signaux de commande B (S_b).

14. Système de bus selon l'une quelconque des revendications 6 à 13, **caractérisé en ce que** le comportement d'abonnés de bus identiques (Xa, Xb, Xc, Xd, Xe, Xf, E) est déterminé par la combinaison de raccordement des lignes de raccordement (P, G, S).

15. Système de bus selon l'une quelconque des revendications 6 à 14, **caractérisé en ce que** la partie de circuit (A, B, C, D) amène les potentiels des lignes de raccordement (P, G, S, S a, S b) à l'abonné du bus (Xa, Xb, Xc, Xd, Xe, Xf , E).

16. Système de bus selon l'une quelconque des revendications précédentes, **caractérisé en ce que** la partie de circuit (A, B, C, D) est intégrée dans l'abonné du bus (Xa, Xb, Xc, Xd, Xe, Xf, E).

## Claims

1. Electronic circuit component (A, B, C, D) for encoding a bus participant (Xa, Xb, Xc, Xd, Xe, Xf, E) assigned to it on a bus system, **characterised in that** the circuit component (A, B, C, D) is linkable in different connection combinations with at least two connection lines (P, G, S, S_a, S_b) designed as supply lines (P, G) and/or signal lines (S, S_a, S_b) and that the circuit component (A, B, C, D) has means for recognising the respective connection combination of the connection lines (P, G, S, S-_a, S_b) that are connected and for encoding the bus participant (Xa, Xb, Xc, Xd, Xe, Xf, E) assigned to it, dependent upon the connection combination as recognised.

2. Electronic circuit component (A, B, C, D) according to claim 1, **characterised by** a circuit (A) for supplying the circuit component (A, B, C, D) with a supply voltage (P, Plus) and with earth (G), whereby the circuit (A) is preferably designed as a diode array.

3. Electronic circuit component (A, B, C, D) according to claim 1 or 2, **characterised by** a selection logic unit (C) for determining the connection combination of the connection lines (P, G, S, S_a, S_b) connected to the electronic circuit component (A, B, C, D).

4. Electronic circuit component (A, B, C, D) according to one of the preceding claims, **characterised by** a signal output driver (B) with connection selection designed such that it links a signal output of the bus participant (Xa, Xb, Xc, Xd, Xe, Xf, E) optionally with one of a plurality of connection pins (1, 2, 3) of the circuit component (A, B, C, D), whereby the circuit component (A, B, C, D) is linkable via the connection pins (1, 2, 3) with the connection lines (P, G, S, S_a, S_b).

5. Electronic circuit component (A, B, C, D) according to one of the preceding claims, **characterised by** a signal input driver (D) with connection selection designed such that it links a signal input of the bus participant (Xa, Xb, Xc, Xd, Xe, Xf, E) optionally with one of a plurality of connection pins (1, 2, 3) of the circuit component (A, B, C, D), whereby the circuit component (A, B, C, D) is linkable via the connection pins (1, 2, 3) with the connection lines (P, G, S, S_a, S_b).

6. Bus system with a plurality of bus participants (Xa, Xb, Xc, Xd, Xe, Xf, E), whereby each bus participant (Xa, Xb, Xc, Xd, Xe, Xf, E) is connected to at least two connection lines (P, G), and whereby an electronic circuit component (A, B, C, D) is assigned to each bus participant (Xa, Xb, Xc, Xd, Xe, Xf, E) for encoding the respective bus participant (Xa, Xb, Xc, Xd, Xe, Xf, E), **characterised in that** the circuit component (A, B, C, D) is linkable in different connection combinations with connection lines (P, G, S, S_a, S_b) designed as supply lines (P, G) and/or signal lines (S) and that the circuit component (A, B, C, D) has means for recognising the respective connection combination of the connection lines (P, G, S, S_a, S_b) that are connected and for encoding the bus participant (Xa, Xb, Xc, Xd, Xe, Xf, E) assigned to it, dependent upon the connection combination as recognised.

7. Bus system according to claim 6, **characterised in that** the circuit component (A, B, C, D) is designed according to one of the claims 1 to 5.

8. Bus system according to claim 6 or 7, **characterised in that** the circuit component (A, B, C, D) has the codes for all the connection combinations.

9. Bus system according to one of the claims 6 to 8, **characterised in that** the bus participants (Xa, Xb, Xc, Xd, Xe, Xf, E) are designed to be the same.

10. Bus system according to one of the claims 6 to 9, **characterised in that** the connection lines (P, G) are provided for earth (G) and voltage supply (P).

11. Bus system according to one of the claims 6 to 10, **characterised in that** a connection line is provided for earth (G) and a connection line is provided for the voltage supply.

12. Bus system according to one of the claims 6 to 11, **characterised in that** three connection lines (P, G, S) for earth (G), voltage supply (P) and control signals (S) are provided.

13. Bus system according to one of the claims 6 to 12, **characterised in that** four connection lines (P, G, S_a, S_b) for earth (G), voltage supply (P), control signals A (S_a) and control signals B (S_b) are provided.

14. Bus system according to one of the claims 6 to 13, **characterised in that** the behaviour of identical bus participants (Xa, Xb, Xc, Xd, Xe, Xf, E) is determined by the connection combination of the connection lines (P, G, S) .

15. Bus system according to one of the claims 6 to 14, **characterised in that** the circuit component (A, B, C, D) feeds the potentials of the connection lines (P, G, S, S_a, S_b) to the bus participant (Xa, Xb, Xc, Xd, Xe, Xf, E).

16. Bus system according to one of the preceding claims, **characterised in that** the circuit component (A, B, C, D) is integrated into the bus participants (Xa, Xb, Xc, Xd, Xe, Xf, E).
